# EUROPÄISCHE PATENTSCHRIFT

(11) **EP 3 419 820 B1**
(45) Veröffentlichungstag und Bekanntmachung des Hinweises auf die Patenterteilung: **03.03.2021**
(21) Anmeldenummer: 17701265.5
(22) Anmeldetag: 09.01.2017
(51) Int. Cl.: B29D 99/00, B29C 45/14, B60J 10/75, B29L 31/26, B29C 45/00, B29L 31/30

(54) **VERFAHREN ZUR HERSTELLUNG EINES DICHTUNGSELEMENTS**
METHOD FOR PRODUCING A SEALING ELEMENT
PROCÉDÉ DE PRODUCTION D'UN ÉLÉMENT D'ÉTANCHÉITÉ

(30) Priorität: 26.02.2016 DE 102016103490
(43) Veröffentlichungstag der Anmeldung: 02.01.2019
(73) Patentinhaber: CQLT SaarGummi Technologies S.à.r.l., 5544 Remich (LU)
(72) Erfinder: MICOUT, Vincent, 66679 Losheim (DE)
(74) Vertreter: Patentanwälte Bernhardt / Wolff Partnerschaft mbB
(86) Internationale Anmeldenummer: PCT/EP2017/000017
(87) Internationale Veröffentlichungsnummer: WO 2017/144146

(56) Entgegenhaltungen:
- EP-A1- 3 093 116
- EP-A1- 3 093 116
- EP-A2- 0 427 383
- EP-A2- 0 427 383
- DE-U1- 9 307 620
- DE-U1- 9 307 620
- US-A- 5 009 464
- US-A1- 2005 229 495

## Beschreibung

Die Erfindung betrifft ein Verfahren zur Herstellung eines Dichtungselements für die Bildung einer Dichtung an einer Fahrzeugkarosserie, insbesondere an einer Fahrzeugtür.

Aus der DE 93 07 620 U1 ist eine Kraftfahrzeugdichtung bekannt, welche eine Befestigungsschiene und einer daran angespritzten Formdichtung umfasst. Die Befestigungsschiene weist mehrere Clipse auf, welche zum haltenden Eingriff in Verankerungslöcher einer Karosserie vorgesehen sind. Vor dem Anspritzen greifen die Glocken eines Spritzwerzeugs jeweils den zugehörigen Clip über.

Aus der EP 0 427 383 A2 ist ein Herstellungsverfahren für eine gebogene Kraftfahrzeugdichtung bekannt, bei welcher in einen Ausschnitt eines Profilstrangabschnitts eine gebogenen Halterung eingesetzt und der Ausschnitt größtenteils mittels Anspritzen geschlossen wird. Das verwendete Spritzwerkzeug enthält einen radialen Arm, der die Spritzgussformm relativ zu einem in den Profilstrangabschnitt geschnittenen Anschlag getrennt hält. Anschließend wir die Halterung entfernt und die verbleibende Öffnung im Profilstrangabschnitt durch einen weiteren Einsatz geschlossen. Hierdurch wird eine dauerhafte Biegung des Profilstrangabschnitts erreicht.

Bei der Herstellung solcher Dichtungselemente, insbesondere der Herstellung von Verbunddichtungselementen mit einem extrudierten Profilstrangabschnitt und daran angespritzten weiteren Elementteilen, kommt es darauf an, den Profilstrangabschnitt im Zuge der Bearbeitung möglichst exakt zu platzieren, um vorgegebene Endmaße des Dichtungselements einzuhalten.

Durch die Erfindung wird ein Verfahren der obengenannten Art dadurch weitergebildet, dass der Profilstrangabschnitt mit einem sich quer zur Stranglängsrichtung erstreckenden Vorsprung versehen wird, der Profilstrangabschnitt einer Stanzbearbeitung unterzogen, wobei der Vorsprung zur Positionierung des Profilstrangabschnitts in Stranglängsrichtung relativ zu einem Stanzwerkzeug genutzt wird, und an den Profilstrangabschnitt ein weiterer Elementteil des Dichtungselements angespritzt wird, wobei der Vorsprung zur Positionierung des Profilstrangabschnitts in Stranglängsrichtung relativ zu einem Spritzwerkzeug genutzt wird.

Vorzugsweise erfolgt die Strangbearbeitung unter Verkürzung der Länge des Profilstrangabschnitts, insbesondere unter Verkürzung an beiden Strangenden.

In weiterer Ausgestaltung der Erfindung wird der Profilabschnitt zur Positionierung relativ zu dem Stanzwerkzeug auf einen Werkstückträger aufgebracht, wobei der Vorsprung in eine Aussparung in dem Werkstückträger eingreift. Es versteht sich, dass der Vorsprung und die Aussparung so angeordnet sind, dass der Profilstrangabschnitt auf dem Werkstückträger die für die Stanzbearbeitung geeignete Position einnimmt. Insbesondere ist die Länge der Aussparung in Stranglängsrichtung etwas größer als die entsprechende Länge des Vorsprungs. Damit lässt sich sichern, dass der Profilstrangabschnitt spannungsfrei auf den Werkstückträger aufgelegt werden kann.

In weiterer Ausgestaltung der Erfindung wird der Vorsprung in Stranglängsrichtung in einem bestimmten Abstand zu dem Stanz- bzw. Spritzwerkzeug angeordnet. Vorteilhaft lässt sich ein solcher Positioniervorsprung auch zur exakten Montage des Dichtungselements auf einem Montagesitz an einer Fahrzeugkarosserie nutzen.

Zur Positionierung des Profilstrangabschnitts relativ zu dem Stanz- bzw. Spritzwerkzeug kann der jeweilige Abstand des Vorsprungs in Stranglängsrichtung zu dem Stanz- bzw. Spritzwerkzeug gemessen und der vorbestimmte Abstand unter Verschiebung des Stanz- bzw. Spritzwerkzeugs oder/und des Profilabschnitts eingestellt werden.

Zweckmäßig wird ein Vorsprung aus Kunststoff an den Profilstrangabschnitt angespritzt, wobei durch das Anspritzen eine ausreichend feste stoffschlüssige Verbindung zwischen dem Vorsprung und dem Profilstrangabschnitt hergestellt wird. Zweckmäßig ist der Vorsprung als Zapfen ausgebildet.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: die erfindungsgemäße Ausrichtung eines Profilstrangs zu einem Stanzwerkzeug erläuternde Darstellung,
- Fig. 2: die erfindungsgemäße Anordnung eines Profilstrangs relativ zu einem Spritzwerkzeug erläuternde Darstellung, und
- Fig. 3: ein nach dem Verfahren von Fig. 1 und 2 hergestelltes Dichtungselement.

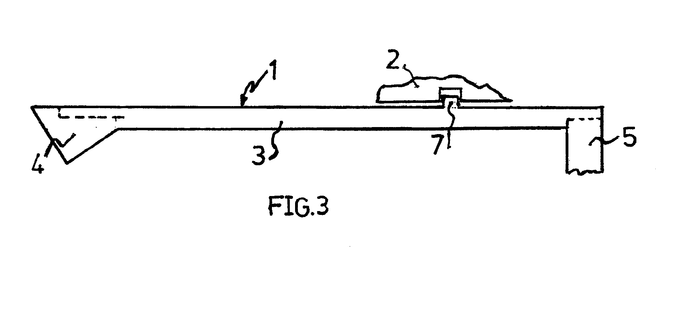

Ein in Fig. 3 gezeigtes Verbunddichtungselement 1 zur Bildung einer Dichtung an einer in Fig. 3 ausschnittsweise gezeigten Fahrzeugtür 2 umfasst einen Elementteil, der durch einen extrudierten Profilstrangabschnitt 3 gebildet ist, sowie an den Profilstrangabschnitt 3 angespritzte Elementteile 4 und 5. Das Verbunddichtungselement 1 wird an der Fahrzeugtür 2 zur Bildung der Dichtung unter Biegung des Profilstrangabschnitts 3 verlegt.

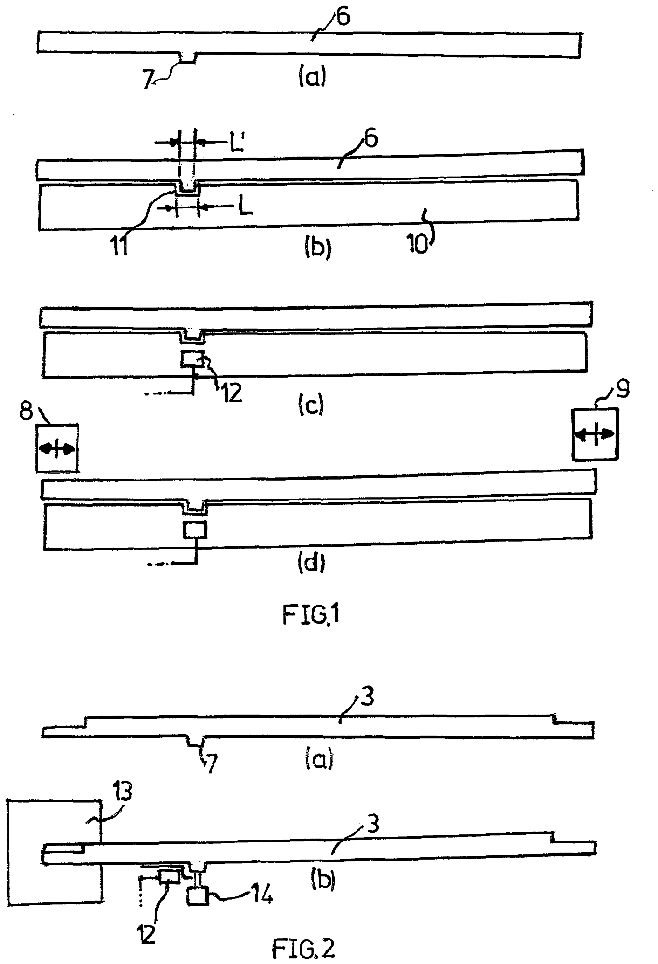

Zur Herstellung des in Fig. 3 gezeigten Verbunddichtungselements 1 wird an eine in Fig. 1 gezeigte, aus Elastomermaterial bestehende Vorform 6 des Profilstrangabschnitts 3 ein quer zur Stranglängsrichtung von der Vorform zapfenartig vorstehendes Positionierelement 7 angespritzt. In dem gezeigten Beispiel besteht das Positionierelement 7 z.B. aus PP oder PE, das beim Anspritzen an die Vorform 6 mit dem Elastomermaterial der Vorform 6 eine stoffschlüssige Verbindung eingeht. Neben den genannten kämen für das Positionierelement 7 auch andere Kunststoffe in Betracht, z.B. HDPE.

Zur Anspritzung der Elementteile 4,5 an den Profilstrangabschnitt 3 bedürfen die Enden der Vorform 6, die von einem endlos extrudierten Profilstrang abgetrennt wurde, zunächst einer Stanzbearbeitung durch in Fig. 1d schematisch dargestellte Stanzeinrichtungen 8 und 9. Die Stanzbearbeitung erfolgt unter Bildung in Fig. 3 durch Strichlinien angedeuteter Stanzmuster, wobei die Vorform 6 durch Abtrennen von Endstücken an beiden Enden in ihrer Gesamtheit verkürzt wird.

Zur Stanzbearbeitung wird gemäß Fig. 1b die Vorform 6 mit dem angespritzten Positionierelement 7 auf einen Werkstückträger 10 aufgelegt. Der Werkstückträger 10 weist eine den Positioniervorsprung 7 aufnehmende Ausnehmung 11 auf. Die Länge L der Ausnehmung 11 in Stranglängsrichtung ist etwas größer als die entsprechende Länge L' des Positionierelements 7.

Der Längenunterschied L - L' ist so groß, dass beim Auflegen der Vorform 6 auf den Werkstückträger 10 das Positionierelement 7 klemm- und spannungsfrei in die Ausnehmung 11 eingreifen kann. Der Längenunterschied L - L' ist andererseits so klein, dass bei geringstmöglicher Überlänge der Vorform 6 gegenüber dem aus der Vorform 6 auszustanzenden Profilstrangabschnitt 3 die Vorform 6 an beiden Enden in Stranglängsrichtung über die Stanzeinrichtungen 8,9 hinausragt und ein Ausstanzen des Profilstrangabschnitts 3 aus der Vorform 6 möglich ist.

Ein vorgegebener Abstand zwischen dem Positionierelement 7 und den Enden des Profilstrangabschnitts 3 kann eingehalten werden, indem gemäß Fig. 1c mit Hilfe eines Sensors 12 die genaue Position des Positionierelements 7 in Stranglängsrichtung ermittelt wird und die Position der Stanzeinrichtungen 8,9 dann entsprechend dem vorgegebenen Abstand gemäß Fig. 1d verstellt und der genauen Position des Positionierelements 7 innerhalb der Ausnehmung 11 angepasst wird. Zur Positionsermittlung können auch mehrere Sensoren eingesetzt werden.

Im Ergebnis entsteht der stanzbearbeitete Profilstrangabschnitt 3, dessen Positionierelement sich in Bezug auf die Strangenden in einer vorgegebenen Längenposition befindet.

Zur Herstellung des in Fig. 3 gezeigten Verbundteils 1 wird der in Fig. 2a allein dargestellte Profilstrangabschnitt 3 mit den Spritzteilen 4,5 verbunden. Gemäß Fig. 2b wird das Strangende jeweils in ein Spritzwerkzeug 13 eingeführt. Die erforderliche Position des Profilstrangs 3 in Bezug auf das Spritzwerkzeug 13 wird z.B. durch einen Anschlag oder wie im vorliegenden Fall dadurch erfasst, dass ein Sensor 12 die jeweilige Position des Positioniervorsprungs 7 ermittelt. Der Vorschub des Profilstrangabschnitts 3 wird bei Erreichen der Sollposition automatisch beendet und der Profilstrangabschnitt 3 durch eine Klemmeinrichtung 14 in der Sollposition fixiert.

Die Klemmeinrichtung 14 könnte abweichend vom gezeigten Beispiel auch an einer anderen, näher dem Spritzwerkzeug 13 gelegenen Position am Profilstrangabschnitt 3 angreifen.

## Patentansprüche

1. Verfahren zur Herstellung eines Dichtungselements (1) für die Bildung einer Dichtung an einer Fahrzeugkarosserie (2), insbesondere einer Fahrzeugtür, wobei ein extrudierter Profilstrangabschnitt (3,6) mit einem sich quer zur Stranglängsrichtung erstreckenden Vorsprung (7) versehen wird, der Profilstrangabschnitt (6) einer Stanzbearbeitung unterzogen wird, wobei der Vorsprung (7) zur Positionierung des Profilstrangabschnitts (3,6) in Stranglängsrichtung relativ zu einem Stanzwerkzeug (8, 9) genutzt wird, und an den Profilstrangabschnitt (3) ein weiterer Elementteil (4,5) des Dichtungselements (1) angespritzt wird, wobei der Vorsprung (7) zur Positionierung des Profilstrangabschnitts (3,6) in Stranglängsrichtung relativ zu einem Spritzwerkzeug (13) genutzt wird.

2. Verfahren nach Anspruch 1,
**dadurch gekennzeichnet,**
**dass** die Stanzbearbeitung unter Verkürzung der Länge des Profilstrangabschnitts (6) erfolgt, insbesondere unter Verkürzung an beiden Strangenden.

3. Verfahren nach Anspruch 1 oder 2,
**dadurch gekennzeichnet,**
**dass** der Profilstrangabschnitt (6) zur Positionierung relativ zu dem Stanzwerkzeug (8,9) auf einen Werkstückhalter (10) aufgebracht wird, wobei der Vorsprung (7) in eine Aussparung in dem Werkstückträger (10) eingreift.

4. Verfahren nach Anspruch 3,
**dadurch gekennzeichnet,**
**dass** die Länge der Aussparung (11) in Stranglängsrichtung größer als die entsprechende Länge des Vorsprungs (7) ist.

5. Verfahren nach einem der Ansprüche 1 bis 4,
**dadurch gekennzeichnet,**
**dass** der Vorsprung (7) in Stranglängsrichtung in einem bestimmten Abstand zu dem Stanz- bzw. Spritzwerkzeug (8,9;13) angeordnet wird.

6. Verfahren nach Anspruch 5,
**dadurch gekennzeichnet,**
**dass** zur Positionierung des Profilstrangabschnitts (3,6) relativ zu dem Stanz- bzw. Spritzwerkzeug (8,9;13) der jeweilige Abstand des Vorsprungs (7) zu dem Stanz- bzw. Spritzwerkzeug (8,9;13) in Stranglängsrichtung gemessen und der bestimmte Abstand unter Verschiebung des Stanz- bzw. Spritzwerkzeugs (8,9;13) oder/und des Profilstrangabschnitts (3,6) eingestellt wird.

7. Verfahren nach einem der Ansprüche 1 bis 6,
**dadurch gekennzeichnet,**
**dass** ein Vorsprung (7) aus Kunststoff an den Profilstrangabschnitt (3,6) angespritzt wird, insbesondere ein zapfenartiger Vorsprung (7).

## Claims

1. Method for producing a sealing element (1) for forming a seal on a vehicle body (2), in particular a vehicle door, wherein an extruded profile strand portion (3, 6) is provided with a projection (7) which extends transversely with respect to the strand longitudinal direction, the profile strand portion (6) is subjected to a punching operation, wherein the projection (7) is used for positioning the profile strand portion (3, 6) in the strand longitudinal direction relative to a punching tool (8, 9), and a further element part (4, 5) of the sealing element (1) is injection-moulded onto the profile strand portion (3), wherein the projection (7) is used for positioning the profile strand portion (3, 6) in the strand longitudinal direction relative to an injection mould (13).

2. Method according to Claim 1,
**characterized**
**in that** the punching operation occurs with shortening of the length of the profile strand portion (6), in particular with shortening at both strand ends.

3. Method according to Claim 1 or 2,
**characterized**
**in that**, for positioning relative to the punching tool (8, 9), the profile strand portion (6) is applied to a workpiece holder (10), wherein the projection (7) engages in a recess in the workpiece carrier (10).

4. Method according to Claim 3,
**characterized**
**in that** the length of the recess (11) in the strand longitudinal direction is greater than the corresponding length of the projection (7).

5. Method according to one of Claims 1 to 4,
**characterized**
**in that** the projection (7) is arranged in the strand longitudinal direction at a specified distance from the punching tool or injection mould (8, 9; 13).

6. Method according to Claim 5,
**characterized**
**in that**, for positioning the profile strand portion (3, 6) relative to the punching tool or injection mould (8, 9; 13), the respective distance of the projection (7) from the punching tool or injection mould (8, 9; 13) is measured in the strand longitudinal direction, and the specified distance is set with displacement of the punching tool or injection mould (8, 9; 13) or/and of the profile strand portion (3, 6).

7. Method according to one of Claims 1 to 6,
**characterized**
**in that** a projection (7) made of plastic is injection-moulded onto the profile strand portion (3, 6), in particular a stub-like projection (7).

## Revendications

1. Procédé de fabrication d'un élément d'étanchéité (1) destiné à former un joint d'étanchéité sur une carrosserie de véhicule (2), en particulier sur une porte de véhicule,
dans lequel
un tronçon de brin profilé (3, 6) extrudé est pourvu d'une saillie (7) s'étendant transversalement à la direction longitudinale du brin,
le tronçon de brin profilé (6) est soumis à une opération de poinçonnage,
la saillie (7) est utilisée pour positionner le tronçon de brin profilé (3, 6) dans la direction longitudinale du brin par rapport à un outil de poinçonnage (8, 9), et
une autre partie (4, 5) de l'élément d'étanchéité (1) est moulée par injection sur le tronçon de brin profilé (3),
la saillie (7) est utilisée pour positionner le tronçon de brin profilé (3, 6) dans la direction longitudinale du brin par rapport à un outil d'injection (13).

2. Procédé selon la revendication 1,
**caractérisé en ce que**
l'opération de poinçonnage est effectuée en raccourcissant la longueur du tronçon de brin profilé (6), en particulier par raccourcissement au niveau des deux extrémités du brin.

3. Procédé selon la revendication 1 ou 2,
**caractérisé en ce que**
le tronçon de brin profilé (6) est appliqué sur un porte-pièce (10) pour le positionnement par rapport à l'outil de poinçonnage (8, 9), la saillie (7) s'engageant dans une échancrure dans le porte-pièce (10).

4. Procédé selon la revendication 3,
**caractérisé en ce que**
la longueur de l'échancrure (11) dans la direction longitudinale du brin est supérieure à la longueur correspondante de la saillie (7).

5. Procédé selon l'une des revendications 1 à 4,
**caractérisé en ce que**
la saillie (7) est disposée dans la direction longitudinale du brin à une certaine distance de l'outil de poinçonnage ou d'injection (8, 9 ; 13).

6. Procédé selon la revendication 5,
**caractérisé en ce que**
pour le positionnement du tronçon de brin profilé (3, 6) par rapport à l'outil de poinçonnage ou d'injection (8, 9 ; 13), la distance respective de la saillie (7) par rapport à l'outil de poinçonnage ou d'injection (8, 9 ; 13) est mesurée dans la direction longitudinale du brin, et la distance déterminée est ajustée en déplaçant l'outil de poinçonnage ou d'injection (8, 9 ; 13) et/ou le tronçon de brin profilé (3, 6).

7. Procédé selon l'une des revendications 1 à 6,
**caractérisé en ce que**
une saillie (7) en matière plastique est moulée par injection sur le tronçon de brin profilé (3, 6), en particulier une saillie en forme de tenon (7).
